# EUROPEAN PATENT SPECIFICATION

(11) **EP 4 033 800 B1**
(45) Date of publication and mention of the grant of the patent: **12.06.2024**
(21) Application number: 20865297.4
(22) Date of filing: 11.09.2020
(51) Int. Cl.: H04W 24/08, H04B 17/336, H04B 7/06, H04W 24/10

(54) **MEASUREMENT CONFIGURATION METHOD, TERMINAL, AND BASE STATION**
MESSKONFIGURATIONSVERFAHREN, ENDGERÄT UND BASISSTATION
PROCÉDÉ DE CONFIGURATION DE MESURE, TERMINAL ET STATION DE BASE

(30) Priority: 18.09.2019 CN 201910881926
(43) Date of publication of application: 27.07.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Yan, Beijing 100032 (CN); WANG, Fei, Beijing 100032 (CN); JIN, Jing, Beijing 100032 (CN); WANG, Qixing, Beijing 100032 (CN)
(74) Representative: J A Kemp LLP
(86) International application number: PCT/CN2020/114697
(87) International publication number: WO 2021/052246

(56) References cited:
- EP-A1- 3 462 664
- WO-A1-2019/099659
- WO-A1-2020/198977
- CN-A- 110 034 872
- CN-A- 110 050 427
- CN-A- 111 432 427
- CN-A- 111 432 428
- OPPO: "Discussion on Multi-beam Operation Enhancements", 3GPP DRAFT; R1-1908352, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20190826 - 20190830 17 August 2019 (2019-08-17), XP051764961, Retrieved from the Internet: URL:http://www.3gpp.org/ftp/tsg_ran/WG1_RL 1/TSGR1_98/Docs/R1-1908352.zip [retrieved on 2019-08-17]
- Huawei, HiSilicon: "Remaining issues for CSI framework", 3GPP Draft; R1-1800529, 3rd Generation Partnership Project (3GPP), Mobile Competence Centre ; 650, route des Lucioles ; F-06921 Sophia-Antipolis Cedex ; France, vol. RAN WG1, no. Vancouver, Canada; 20180122 - 20180126, 13 January 2018 (2018-01-13), XP051384907, Mobile Competence Centre ; 650, route des Lucioles ; F-06921 Sophia-Antipolis Cedex ; France
- vivo: "Discussion on beam measurement, beam reporting and beam indication", 3GPP Draft; R1-1717472_Discussion on beam measurement, beam reporting and beam indication, 3rd Generation Partnership Project (3GPP), Mobile Competence Centre ; 650, route des Lucioles ; F-06921 Sophia-Antipolis Cedex ; France, vol. RAN WG1, no. Prague, CZ; 20171009 - 20171013, 8 October 2017 (2017-10-08), XP051340660, Mobile Competence Centre ; 650, route des Lucioles ; F-06921 Sophia-Antipolis Cedex ; France

## Description

### CROSS-REFERENCE TO RELATED APPLICATION

The present application claims priority of Chinese Patent Application No. 201910881926.9, filed on September 18, 2019.

### TECHNICAL FIELD

The present disclosure relates to the field of mobile communication technologies, in particular to a measurement configuration method, a terminal, and a base station.

### BACKGROUND

When performing downlink beam measurement, the network side usually transmits a Channel State Information Reference Signal (CSI-RS) or a Synchronization Signal Block (SSB), and User Equipment (UE) receives the CSI-RS or the SSB through different receiving beams, to measure a value of Layer 1-Reference Signal Received Power (L1-RSRP) of the CSI-RS/SSB for each receiving beam.

In the related technologies, it merely defines how the UE performs L1-RSRP reporting in current beam quality reporting. For example, in the case that parameter nrofReportedRS is equal to 1, one CRESSBRI and the corresponding L1-RSRP value are reported. In the case that parameter nrofReportedRS is greater than 1, one or two or four CRI/SSBRIs and values of the corresponding L1-RSRP are reported in a differential manner. In the current beam measurement, merely the L1-RSRP is considered, and the selected beam quality cannot reflect the interference to the beam and cannot meet the communication requirements. Related technologies can be found at least in patent document WO2019/099659A1 and in non-patent document "Discussion on Multi-beam Operation Enhancements", 3GPP DRAFT; R1-1908352.

### SUMMARY

At least one embodiment of the present disclosure provides a measurement configuration method, a terminal, and a network device. The terminal is configured with resources for channel measurement and interference measurement, and more measurement resources can be provided for beam quality measurement.

The present invention is defined in the claims. The present invention relates to a method performed by a terminal and to the terminal only. Portions of the description relating to operations at the base station instead do not fall under the scope of the claims and are retained herein merely as examples useful for understanding the invention.

Compared with related techniques, the measurement configuration method, the terminal, and the base station according to the present disclosure can configure channel measurement resources and interference measurement resources for the terminal, thereby providing more measurement resources for beam quality measurement. Furthermore, embodiments of the present disclosure can also measure and report the L1-SINRs of the beams based on the measurement resources, so that the base station can select a more suitable beam(s) based on the L1-SINRs.

### BRIEF DESCRIPTION OF THE DRAWINGS

By reading the following detailed description, various other advantages and benefits will become apparent to those skilled in the art. The drawings are for the purpose of illustrating embodiments only and are not considered to be a limitation of the present disclosure. Also, the same parts are denoted by the same reference numerals throughout the drawings. In the drawings:
FIG. 1 is a diagram of an application scenario according to an embodiment of the present disclosure.
FIG. 2 is a flowchart of a measurement configuration method applied to a terminal side according to an embodiment of the present disclosure.
FIG. 3 is a diagram of example 1 of resource configuration.
FIG. 4 is a diagram of example 1 of resource configuration according to an embodiment of the present disclosure.
FIG. 5 is a diagram of example 1 of resource configuration according to an embodiment of the present disclosure.
FIG. 6 is a flowchart of a measurement configuration method applied to a base station side.
FIG. 7 is a structural diagram of a terminal according to an embodiment of the present disclosure.
FIG. 8 is another structural diagram of a terminal according to an embodiment of the present disclosure.
FIG. 9 is a structural diagram of a network device.
FIG. 10 is another structural diagram of a network device.

### DETAILED DESCRIPTION

Exemplary embodiments of the present disclosure will be described in more detail below with reference to the drawings. While exemplary embodiments of the present disclosure are illustrated in the drawings, it should be understood that the disclosure may be implemented in various forms without being limited by the embodiments set forth herein. Rather, these embodiments are provided to enable a more thorough understanding of the disclosure and to enable the full scope of the disclosure to be communicated to those skilled in the art.

The terms "first", "second" and the like in the specification and claims of the present application are used to distinguish similar objects and do not need be used to describe a particular order or priority. It should be understood that the terms used in this way can be interchanged where appropriate so that embodiments of the present disclosure described herein for example can be implemented in an order other than those illustrated or described herein. In addition, the terms "including" and "having" and any variations of them are intended to cover non-exclusive inclusion. For example, processes, methods, products, or devices that include a series of operations or units may not need to be limited to those clearly listed, but may include other steps or units that are not clearly listed or inherent to such processes, methods, products, or devices. "And/or" in specification and claims denote at least one of the connected object.

Technologies described herein are not limited to New Radio (NR) system and Long Time Evolution (LTE)/LTE-Advanced (LTE-A) system, and may also be be used in various wireless communication systems such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems. The terms "system" and "network" are often used interchangeably. CDMA systems can implement radio technologies such as CDMA2000, Universal Terrestrial Radio Access (UTRA) and so on. UTRA includes Wideband Code Division Multiple Access (WCDMA) and other CDMA variants. TDMA systems can implement radio technologies such as the Global System for Mobile Communications (GSM). The OFDMA system can implement radio technologies such as UltraMobile Broadband (UMB), Evolution-UTRA (E-UTRA), IEEE 802.21 (Wi-Fi), IEEE 802.16 (WiMAX), IEEE 802.20 and Flash-OFDM, etc. UTRA and E-UTRA are part of the Universal Mobile Telecommunications System (UMTS). LTE and more advanced LTE (such as LTE-A) are new versions of UMTS using E-UTRA. UTRA, E-UTRA, UMTS, LTE, LTE-A, and GSM are described in the literature of the organization called the 3rd Generation Partnership Project (3GPP). CDMA2000 and UMB are described in literature of the organization called "Third Generation Partnership Project 2" (3GPP2). The technologies described herein may be used both for the above-mentioned systems and radio technologies and for other systems and radio technologies. However, the following description describes an NR system for example purpose, and uses NR terms in most of the following descriptions, although these techniques may be applied to applications other than NR system applications.

The following description provides embodiments without limiting the scope, applicability, or configuration set forth in the claims. The functionality and arrangement of the discussed elements may be changed without departing from the spirit and scope of the present disclosure. Various examples may suitably omit, replace, or add various protocols or components. For example, the described methods may be performed in a different order from that described, and various steps may be added, omitted, or combined. In addition, features described with reference to certain embodiments may be combined in other embodiments.

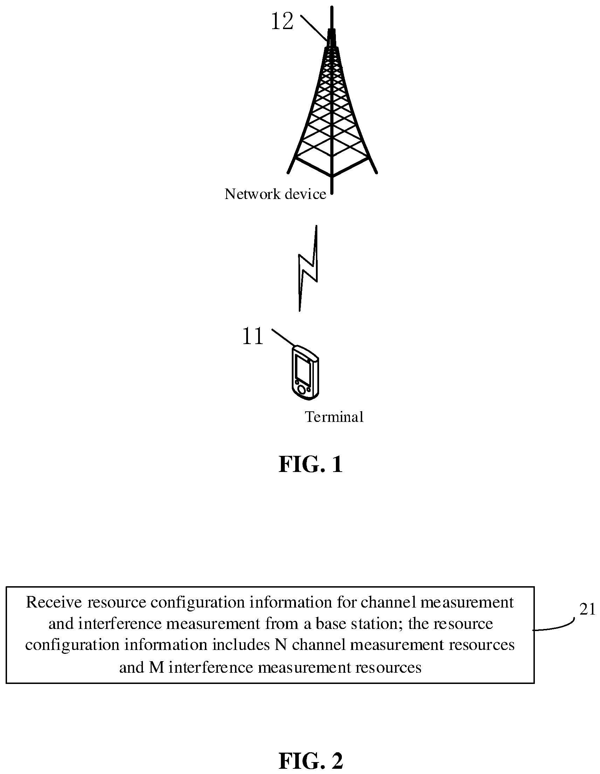

Referring to FIG. 1, a block diagram of a wireless communication system to which embodiments of the present disclosure are applicable is illustrated. The wireless communication system includes a terminal 11 and a network device 12. The terminal 11 may also be referred to as a user terminal or a UE. The terminal 11 may be a terminal-side device such as a mobile phone, a Tablet Personal Computer, a Laptop Computer, a Personal Digital Assistant (PDA), a Mobile Internet Device (MID), a Wearable Device, or a vehicle-mounted device. It should be noted that the specific type of the terminal 11 is not limited in the embodiment of the present disclosure. The network device 12 may be a base station and/or a core network element; herein the base station may be a base station (e.g., gNB, 5G NR NB, etc.) of 5G and later versions, or a base station (e.g., eNBs, WLAN access points, or other access points, etc.) in another communication system; herein the base station may be referred to as Node B, Evolved Node B, access point, Base Transceiver Station (BTS), radio base station, radio transceiver, Basic Service Set (BSS), Extended Service Set (ESS), Home Node B, Home Evolved Node B, WLAN access point, Wi-Fi node, or some other suitable term in the art. The base station is not limited to a particular technical term as long as the same technical effect is achieved. It should be noted that, in the embodiment of the present disclosure, only the base station in the NR system is used as an example, but the specific type of the base station is not limited.

The base station may communicate with the terminal 11 under the control of a base station controller, which in various examples may be part of a core network or some base stations. Some base stations may communicate control information or user data with the core network via backhaul. In some embodiments, some of these base stations may communicate with each other directly or indirectly over a backhaul link, which may be a wired or wireless communication link. A wireless communication system may support operation on multiple carriers (waveform signals of different frequencies). A multi-carrier transmitter can simultaneously transmit modulated signals on the multiple carriers. For example, each communication link may be a multi-carrier signal modulated according to various radio technologies. Each modulated signal may be transmitted on a different carrier and may carry control information (e.g., reference signals, control channels, etc.), overhead information, data, etc.

The base station may be in wireless communication with the terminal 11 via one or more access point antennas. Each base station may provide communication coverage for its respective coverage area. The coverage area of the access point may be divided into sectors that constitute only a portion of the coverage area. The wireless communication systems may include different types of base stations (e.g. macro base stations, micro base stations or pico base stations). The base stations may also utilize different radio technologies such as cellular or WLAN radio access technologies. The base stations may be associated with the same or different access networks or operator deployments. Coverage areas of different base stations (including coverage areas of the same or different types of base stations, coverage areas utilizing the same or different radio technologies, or coverage areas belonging to the same or different access networks) may overlap.

The communication link in the wireless communication system may include an uplink for carrying Uplink (UL) transmission (e.g. from terminal 11 to network device 12) or a downlink for carrying Downlink (DL) transmission (e.g. from network device 12 to terminal 11). The UL transmission may also be referred to as reverse link transmissions, and the DL transmission may also be referred to as forward link transmission. The DL transmission may be performed using a licensed frequency band, an unlicensed frequency band, or both. Similarly, UL transmission may be performed using licensed frequency band, unlicensed frequency band, or both.

As described in the Background section, in the related technologies, generally, merely Layer 1-Signal to Interference plus Noise Ratio (L1-RSRP) is considered for beam measurement, and the problem of interference to the beams is not considered. It is possible that although the L1-RSRP of the selected beam is relatively high, the interference is also very high, resulting in a relatively low L1-SINR of the beam. There is currently no measurement mechanism for the L1-SINR of the beam in the related technologies, and there is no solution for configuring channel measurement resources and interference measurement resources on the network side. In addition, there is no format and scheme for UE to report L1-SINR in the related technologies. Accordingly, embodiments of the present disclosure aim to introduce a beam measurement and reporting scheme based on L1-SINR.

Referring to FIG. 2, embodiments of the present disclosure provide a measurement configuration method. When applied to the terminal, the method includes the following operations.

At S21, resource configuration information for channel measurement and interference measurement are received from a base station. The resource configuration information includes N channel measurement resources and M interference measurement resources, and both N and M are integers greater than or equal to 1.

Here, optionally, each of the channel measurement resources may be CSI-RS or SSB, and each of the interference measurement resources may be CSI-RS. Specifically, each of the interference measurement resources may be a Non-Zero Power (NZP) CSI-RS or a Zero Power (ZP) CSI-RS.

Through the above operations, embodiments of the present disclosure configure channel measurement resources for channel measurement and interference measurement resources for interference measurement for the terminal, so that the L1-SINR(s) of the beam(s) can be measured and reported by the terminal based on the above measurement resources, thereby selecting a more suitable beam(s) on the basis of the L1-SINR(s).

After performing the S21, the terminal may further measure the channel measurement resources and the interference measurement resources according to the resource configuration information, and calculate at least one L1-SINR according to measurement of the channel measurement resources and the interference measurement resources.

According to at least one embodiment of the present disclosure, the terminal further receives first QCL configuration information from the base station. The first QCL configuration information is used to configure QCL-Type D information of the channel measurement resources and QCL-Type D information of the interference measurement resources. An L1-SINR is calculated from measurement of a channel measurement resource and an interference measurement resource that have a QCL-Type D relationship with each other.

Here, QCL may refer to quasi-co-address relationship. For example, in an LTE system, quasi-co-location of antenna ports may be an assumption about a state between antenna ports. If one antenna port is quasi-co-located with the other antenna port, it means that the terminal may assume that a large-scale characteristic of a signal received from one of the antenna ports (or a radio channel corresponding to the antenna port) is the same as a large-scale characteristic of a signal received from another antenna port (or a radio channel corresponding to the another antenna port) in whole or in part. That is, if the channel characteristics on an antenna port symbol can be derived from another antenna port, it can be assumed that the two ports are in QCL, and the channel estimation result obtained from one port can be used at the another port. Currently, types such as QCL-Type A, QCL-Type B, QCL-Type C, and QCL-Type D are defined for QCL; herein QCL-Type D is the quasi-co-location relationship of the spatial reception parameters. According to other embodiments of the present disclosure, the terminal may further receive second QCL configuration information from the base station. The second QCL configuration information is used to configure QCL-Type D information of the channel measurement resources, and an L1-SINR may be calculated from measurement of a channel measurement resource and an interference measurement resource which is the same as the channel measurement resource in terms of spatial filtering or QCL-Type D.

After at least one L1-SINR is calculated, the terminal may report the L1-SINR(s) and an identifier(s) of a channel measurement resource(s) and/or an identifier(s) of an interference measurement resource(s) corresponding to the L1-SINR(s) to the base station. Specifically, the L1-SINR(s) and the identifier(s) of the channel measurement resource(s) corresponding to the L1-SINR(s) can be reported; or the L1-SINR(s) and the identifier(s) of the interference measurement resource(s) corresponding to the L1-SINR(s) can be reported; or the L1-SINR(s) and the identifier(s) of the channel measurement resource(s) and the identifier(s) of the interference measurement resource(s) corresponding to the L1-SINR(s) can be reported. In addition, the L1-SINR(s) reported herein may be all or part of the calculated at least one L1-SINR. In the case of reporting part of the calculated at least one L1-SINR, the terminal may select part of the calculated at least one L1-SINR for reporting in descending order of L1-SINR(s).

The above measurement configuration method will be further described by several specific examples below.

Example 1, which is not part of the present invention and is described for illustration purpose: M may be equal to N, and the N channel measurement resources and N interference measurement resources may be in one-to-one correspondence in a predetermined order.

In example 1, when the terminal calculates at least one L1-SINR according to measurement of the channel measurement resources and the interference measurement resources, a channel measurement resource and an interference measurement resource corresponding to each other may be measured in a same receiving direction; herein for different channel measurement resources, receiving directions are different. Each of the at least one L1-SINR may be calculated according to measurement of the channel measurement resource and the interference measurement resource corresponding to each other in the same receiving direction.

In the case that the L1-SINR(s) and the identifier(s) of the channel measurement resource(s) and/or the identifier(s) of the interference measurement resource(s) corresponding to the L1-SINR(s) are reported to the base station, Y L1-SINRs may be selected by the terminal from the at least one L1-SINR, and the Y L1-SINRs and identifier(s) of channel measurement resource(s) and/or identifier(s) of interference measurement resource(s) corresponding to the Y L1-SINRs may be reported to the base station; herein Y is an integer greater than or equal to 1. For example, the first Y L1-SINRs can be selected in descending order of L1-SINRs. Here, Y may be a predetermined value or a value configured by the base station.

In example 1, the base station may configure N channel measurement resources and N interference measurement resources, and correspond the channel measurement resources to interference measurement resources one to one in a certain order to calculate the L1-SINR(s). Further, the terminal may receive each pair of channel measurement resources and interference measurement resources through the same receiving beam.

The beneficial effects of the example 1 include at least as follows: it can be used for the base station to determine the optimal receiving beam. Especially after the base station has certain prior information, and desires that the terminal perform a more accurate L1-SINR measurement, so as to determine an optimal receiving beam. For example, if the base station already has some measurements (such as Channel Quality Indicator, CQI, RSRP, etc.) of the beams and desires to make more accurate pairing on this basis, the base station may configure the above channel measurement resources and interference measurement resources for the terminal.

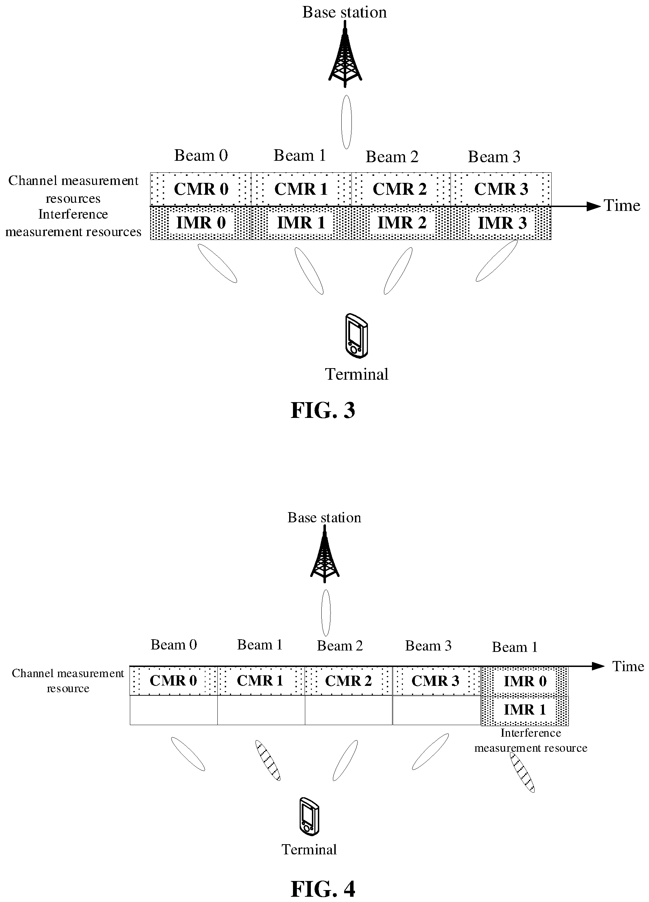

FIG. 3 illustrates a specific resource configuration scheme of example 1, in which the base station configures four Channel Measurement Resources (CMRs) with identifiers from CMR 0 to CMR 3, and four Interference Measurement Resources (IMRs) with identifiers from IMR 0 to IMR 3 for the terminal. FIG. 3 is not part of the present invention and is illustrated for illustration purpose. The positional relationship of the above resources in time domain is illustrated in FIG. 3. It can be seen that a CMR and an IMR with the same identifier have the same position in time domain. The terminal determines one-to-one correspondences of CMRs and IMRs according to an order of identifiers of CMRs and IMRs. Specifically, CMR 0 corresponds to IMR 0, CMR 1 corresponds to IMR 1, CMR 2 corresponds to IMR 2, and CMR 3 corresponds to IMR 3. Of course, embodiments of the present disclosure may also define the correspondence relationship in other ways, as long as the terminal and the base station determine the correspondence relationship in the same way. The terminal may adopt different receiving beams, such as Beam 0 to Beam 3, to measure the channel measurement resources and the interference measurement resources. Herein, the same receiving beam may be adopted for a channel measurement resource and an interference measurement resource corresponding to the channel measurement resource. Thus, the terminal can calculate the L1-SINRs corresponding four pairs of CMRs and IMRs, which represent L1-SINRs in four directions of receiving beams.

For reporting of L1-SINR, the reporting format 1 that the terminal may adopt includes:
L1-SINR and the identifier of the channel measurement resource corresponding to the L1-SINR.
L1-SINR and the identifier of the interference measurement resource corresponding to the L1-SINR.
L1-SINR and the identifier of the channel measurement resource and the identifier of the interference measurement resource corresponding to the L1-SINR.

In addition, the terminal may report the L1-SINR with the largest value, or report Y identifiers of the channel measurement resources and Y corresponding L1-SINRs. When multiple L1-SINRs are reported, differential reporting format can be adopted.

Example 2: the N channel measurement resources may be located before the M interference measurement resources in time domain.

In example 2, when the terminal calculates at least one L1-SINR according to measurement of the channel measurement resources and the interference measurement resources, the N channel measurement resources may be measured in different receiving directions to obtain a first measurement, which may be received signal strengths, and X channel measurement resources may be selected according to the first measurement. For example, X receiving beams may be selected in descending order of the received signal strengths. M interference measurement resources may be measured in the receiving directions corresponding to the X channel measurement resources to obtain a second measurement, and each of the at least one L1-SINR may be calculated according to measurement of a channel measurement resource and an interference measurement resource in the same receiving direction.

In the case that the L1-SINR(s) and the identifier(s) of the channel measurement resource(s) and/or the identifier(s) of the interference measurement resource(s) corresponding to the L1-SINR(s) are reported to the base station, Z L1-SINRs may be selected by the terminal from the at least one L1-SINR, and the Z L1-SINRs and identifier(s) of channel measurement resource(s) and identifier(s) of interference measurement resources(s) corresponding to the Z L1-SINRs may be reported to the base station; herein Z is an integer greater than or equal to 1. For example, the L1-SINRs are sorted in in descending order, and the first Z L1-SINRs can be selected. Here, Z may be a predetermined value or a value configured by the base station.

In example 2, the base station configures N channel measurement resources and M interference measurement resources, and the channel measurement resources and interference the measurement resources can be staggered in a Time Division Multiplexing (TDM) manner in time domain. The terminal firstly measures the channel measurement resources, determines X receiving beam directions according to measurement of the channel measurement resources, and then receives M interference measurement resources in the determined X receiving beam directions. Since there are M interference measurement resources, M L1-SINRs can be calculated.

The beneficial effects of the second example include at least as follows: when determining the multi-user pairing of the Multi-User-Multi-Input-Multi-Output (MU-MIMO), for example, the base station may configure the receiving beam direction of a CMR corresponding to one of the selected M L1-SINRs to UE1, configure the receiving beam direction of an IMR corresponding to the L1-SINR to UE2, and performs multi-user pairing for UE1 and UE2, thereby reducing interference between UE1 and UE2.

FIG. 4 illustrates a specific resource configuration scheme of example 2, in which the base station configures four CMRs with identifiers from CMR 0 to CMR 3, and two IMRs with identifiers from IMR 0 to IMR 1 for the terminal. The positional relationship of the above resources in time domain is illustrated in FIG. 4. It can be seen that time domain positions of the CMRs are different from those of the IMRs. The terminal may adopt different receiving beams, such as Beam 0 to Beam 3, to measure the channel measurement resources, respectively. Then, according to the order of RSRP sizes, a receiving beam(s) (assuming Beam 1) corresponding to the largest X (assuming one here) RSRP(s) is/are selected. The interference measurement resources IMR 0 and IMR 1 are received through the receiving beam Beam 1, so that the M L1-SINRs (two L1-SINRs here) are calculated by using the measurement of the channel measurement resources and the interference measurement resources measured through the receiving beam(s).

For reporting of an L1-SINR, the reporting format 2 that the terminal may adopt includes:
L1-SINR and the identifier of the channel measurement resource and the identifier of the interference measurement resource corresponding to the L1-SINR.

In addition, the terminal may report the L1-SINR with the largest value, or report Z L1-SINRs and the identifiers of the channel measurement resources corresponding to the Z L1-SINRs and the identifiers of the interference measurement resources corresponding to the Z L1-SINRs. When multiple L1-SINRs are reported, a differential reporting format can be adopted.

Example 3: the M interference measurement resources includes N first interference measurement resources and S second interference measurement resources, the N channel measurement resources and the N first interference measurement resource are in one-to-one correspondence in a predetermined order, and the N channel measurement resources are located before the S second interference measurement resources in time domain.

In example 3, when the terminal calculates at least one L1-SINR according to measurement of the channel measurement resources and the interference measurement resources, a channel measurement resource and a first interference measurement resource corresponding to the channel measurement resource are measured in the same receiving direction; for different channel measurement resources, different receiving directions are adopted. Each of at least one L1-SINR is calculated according to measurement of a channel measurement resource and a first interference measurement resource corresponding to channel measurement resource in the same receiving direction. P L1-SINRs are selected from the at least one L1-SINR, and P receiving directions corresponding to the P L1-SINRs are determined; herein P is an integer greater than or equal to 1. For example, P L1-SINRs are selected in descending order of LI-SINRs. The S second interference measurement resources are measured in the P receiving directions, and each of the at least one L1-SINR is calculated according to measurement of a channel measurement resource and a second interference measurement resource in the same receiving direction.

When the L1-SINR(s) and the identifier(s) of the channel measurement resource(s) and/or the identifier(s) of the interference measurement resource(s) corresponding to the L1-SINR(s) are reported to the base station, L L1-SINRs may be selected from the at least one L1-SINR by the terminal; the L L1-SINRs and an identifiers of channel measurement resources and identifiers of second interference measurement resources corresponding to the L L1-SINRs may be reported to the base station; herein the L is an integer greater than or equal to 1. For example, the first L L1-SINRs can be selected in descending order of L1-SINRs. Here, L may be a predetermined value or a value configured by the base station..

In example 3, the base station configures N channel measurement resources, N first interference measurement resources and S second interference measurement resources; herein the N channel measurement resources and the N first interference measurement resources are in one-to-one correspondence in a certain order, and the channel measurement resources and the second interference measurement resources need to be staggered in a TDM manner in time domain. The terminal performs measurement based on the N channel measurement resources and the N first interference measurement resources, calculates N first L1-SINRs, each according to a respective one of the N channel measurement resources and a respective one of the N first first interference measurement resources corresponding to each other, selects P first L1-SINRs from the N first L1-SINRs, determines P receiving directions corresponding to the P first L1-SINRs, performs measurement on the S second interference measurement resources by using the P receiving directions, and calculates S L1-SINRs, each according to the measurement of a channel measurement resource and a second interference measurement resource in the same receiving direction.

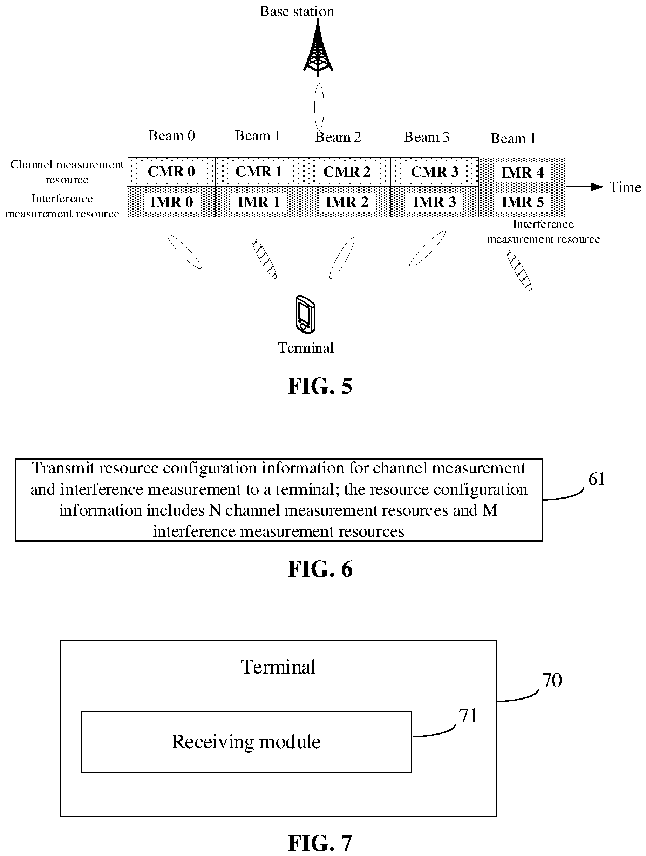

FIG. 5 illustrates a specific resource configuration scheme of example 3, in which the base station configures four CMRs with identifiers from CMR 0 to CMR 3, and six IMRs with identifiers from IMR 0 to IMR 5 for the terminal. The positional relationship of the above resources in time domain is illustrated in FIG. 5. It can be seen that time domain positions of the channel measurement resources and IMR 4-IMR 5 are different. The terminal may adopt different receiving beams, such as Beam 0 to Beam 3, to measure the CMR 0-CMR 3 and IMR 0-IMR 3, respectively. The same receiving beam may be adopted for a channel measurement resource and an interference measurement resource corresponding to the channel measurement resource. Thus, the terminal can calculate the L1-SINRs corresponding to four pairs of CMRs and IMRs, which represent L1-SINRs in four directions of receiving beams. Then, a receiving beam(s) (assuming Beam 1) corresponding to the largest P (assuming one here) RSRP(s) is/are selected in descending order of L1-SINRs. The interference measurement resources IMR 4 and IMR 5 are received through the receiving beam Beam 1, so that the 2 L1-SINRs can be calculated by using the measurement of the channel measurement resources CMR 1 and the interference measurement resources IMR 4 and IMR 5 measured through the receiving beam.

For reporting of the L1-SINR(s), the reporting format 3 that the terminal may adopt is similar to the reporting format 2 of example 2.

FIG. 6 provides a flowchart of a measurement configuration method applied to a base station side according to embodiments of the present disclosure, including the following operations. FIG. 6 is not part of the present invention and is illustrated for illustration purpose.

At S61, resource configuration information for channel measurement and interference measurement is transmitted to a terminal. The resource configuration information includes N channel measurement resources and M interference measurement resources, and both N and M are integers greater than or equal to 1.

Here, Optionally, each of the channel measurement resources may be CSI-RS or SSB, and each of the interference measurement resources may be CSI-RS. Specifically, each of the interference measurement resource may be a Non-Zero Power (NZP) CSI-RS or a Zero Power (ZP) CSI-RS.

Through the above operations, the base station of embodiments of the present disclosure configures channel measurement resources for channel measurement and interference measurement resources for interference measurement for the terminal, so that the L1-SINR(s) of the beam(s) can be measured and reported by the terminal based on the above measurement resources, thereby selecting a more suitable beam(s) on the basis of the L1-SINR(s).

In the embodiments of the present disclosure, after the operation 61 is performed, the base station may further receive a L1-SINR(s) and an identifier(s) of a channel measurement resource(s) and/or an identifier(s) of an interference measurement resource(s) corresponding to the L1-SINR(s) reported by the terminal.

Furthermore, the base station may configure the receiving beam(s) for the terminal based on the L1-SINR(s) and the identifier(s) of the channel measurement resource(s) and/or the identifier(s) of the interference measurement resource(s) corresponding to the L1-SINR(s) reported by the terminal, for example, configure the receiving beam received by the terminal corresponding to the maximum L1-SINR as the receiving beam of the terminal.

According to at least one embodiment of the present disclosure, the base station may further transmit first QCL configuration information to the terminal. The first QCL configuration information is used to configure QCL-Type D information of the channel measurement resources and QCL-Type D information of the interference measurement resources. Herein an L1-SINR is calculated from measurement of a channel measurement resource and an interference measurement resource that have a QCL-Type D relationship with each other.

According to other embodiments of the present disclosure, the base station further transmits second QCL configuration information to the terminal. The second QCL configuration information is used to configure QCL-Type D information of the channel measurement resources, and an L1-SINR is calculated from measurement of a channel measurement resource and an interference measurement resource which is the same as the channel measurement resource in terms of spatial filtering or QCL-Type D.

Optionally, corresponding to the above-mentioned example 1, M may be equal to N, and the N channel measurement resources and N interference measurement resources may be in one-to-one correspondence in a predetermined order.

Optionally, corresponding to the above-mentioned example 2, the N channel measurement resources may be located before the M interference measurement resources in time domain.

Optionally, corresponding to the above-mentioned example 3, the M interference measurement resources may include N first interference measurement resources and S second interference measurement resources, the N channel measurement resources and the N first interference measurement resource may be in one-to-one correspondence in a predetermined order, and the N channel measurement resources may be located before the S second interference measurement resources in time domain.

Optionally, when the base station performs multi-user pairing for MU-MIMO, based on L1-SINRs and identifiers of channel measurement resources and/or identifiers of interference measurement resources corresponding to the L1-SINRs reported by the terminal, a receiving beam direction of a channel measurement resource corresponding to a same L1-SINR in the reported L1-SINRs is configured to the terminal, and a receiving beam direction of an interference measurement resource corresponding to the L1-SINR is configured to another terminal. Herein the another terminal and the terminal belong to the same multi-user pairing.

Based on the above methods, embodiment of the present disclosure further provides a device for implementing the above methods.

Referring to FIG. 7, embodiments of the present disclosure provide a terminal 70, including a receiving module 70, configured to receive resource configuration information for channel measurement and interference measurement from a base station. The resource configuration information includes N channel measurement resources and M interference measurement resources, and both N and M are integers greater than or equal to 1.

Optionally, the terminal further includes a measuring unit, configured to measure the channel measurement resources and the interference measurement resources according to the resource configuration information, and calculate at least one L1-SINR according to measurement of the channel measurement resources and the interference measurement resources.

Optionally, the terminal further includes a receiving unit, configured to receive QCL configuration information from the base station. The QCL configuration information is used to configure a channel measurement resource and an interference measurement resource that have a QCL-Type D relationship with each other.

Herein the L1-SINR may be calculated from measurement of a channel measurement resource and an interference measurement resource that have a QCL-Type D relationship with each other.

Optionally, the terminal further includes a reporting unit, configured to report the L1-SINR and an identifier of a channel measurement resource and/or an identifier of an interference measurement resource corresponding to the L1-SINR to the base station.

Optionally, M may be equal to N, and the N channel measurement resources and N interference measurement resources may be in one-to-one correspondence in a predetermined order.

Optionally, the measuring unit is further configured to measure a channel measurement resource and an interference measurement resource corresponding to each other in a same receiving direction, receiving directions for different channel measurement resources being different, and calculate each of at least one L1-SINR according to measurement of a channel measurement resource and an interference measurement resource corresponding to each other in the same receiving direction.

Optionally, the reporting unit is further configured to select Y L1-SINRs from the at least one L1-SINR, and report the Y L1-SINRs and identifiers of channel measurement resources and/or identifiers of interference measurement resources corresponding to the Y L1-SINRs to the base station; herein Y is an integer greater than or equal to 1.

Optionally, the N channel measurement resources may be located before the M interference measurement resources in time domain.

Optionally, the measuring unit is further configured to measure the N channel measurement resources in difference receiving directions; select X channel measurement resources according to a first measurement; measure the M interference measurement resources in the receiving directions corresponding to the X channel measurement resources to obtain a second measurement, and calculate each of the at least one L1-SINR according to measurement of a channel measurement resource and an interference measurement resource in the same receiving direction.

Optionally, the reporting unit is further configured to select Z L1-SINRs from the at least one L1-SINR; report the Z L1-SINRs and identifiers of channel measurement resources and identifiers of interference measurement resources corresponding to the Z L1-SINRs to the base station; herein the Z is an integer greater than or equal to 1.

Optionally, the M interference measurement resources may include N first interference measurement resources and S second interference measurement resources, the N channel measurement resources and the N first interference measurement resource may be in one-to-one correspondence in a predetermined order, and the N channel measurement resources may be located before the S second interference measurement resources in time domain.

Optionally, the measuring unit is further configured to measure a channel measurement resource and a first interference measurement resource corresponding to each other in a same receiving direction, receiving directions for different channel measurement resources being different; calculate each of at least one L1-SINR according to measurement of a channel measurement resource and an interference measurement resource corresponding to each other in the same receiving direction; select P L1-SINRs from the at least one L1-SINR, and determine P receiving directions corresponding to the P L1-SINRs, P being an integer greater than or equal to 1; measure the S second interference measurement resources in the P receiving directions, and calculate each of the at least one L1-SINR according to measurement of a channel measurement resource and a second interference measurement resource in the same receiving direction.

Optionally, the reporting unit is further configured to select L L1-SINRs from the at least one L1-SINR; report the L L1-SINRs and identifiers of a channel measurement resources and an identifiers of second interference measurement resources corresponding to the L L1-SINRs to the base station; herein the L is an integer greater than or equal to 1.

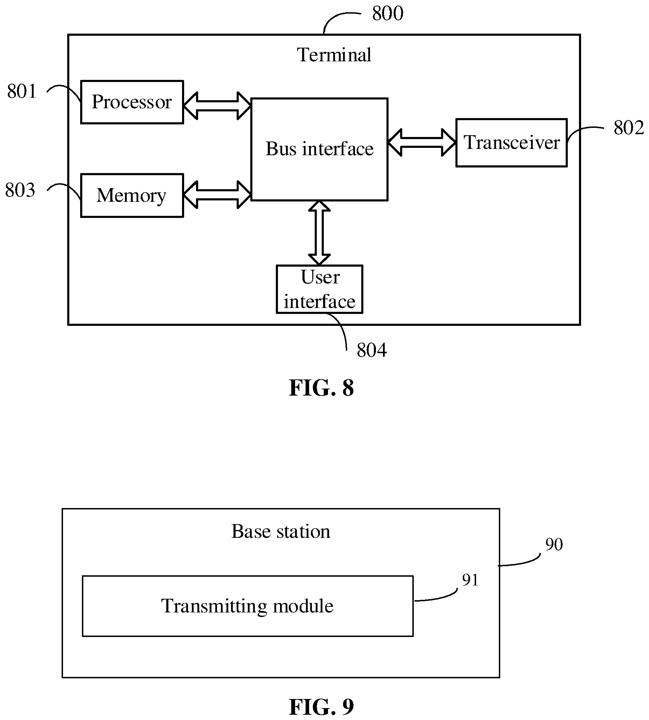

Referring to FIG. 8, embodiments of the present disclosure provide another structure structural diagram of a terminal, which includes a processor 801, a transceiver 802, a memory 803, a user interface 804 and a bus interface.

In the embodiment of the present disclosure, the terminal further includes instructions stored in the memory 803 and executable by the processor 801. The following operations can be implemented when the instructions are executed by the processor 801.

Resource configuration information for channel measurement and interference measurement are received from a base station. Herein, the resource configuration information includes N channel measurement resources and M interference measurement resources, and both N and M are integers greater than or equal to 1.

In FIG. 8, a bus architecture may include any number of interconnected buses and bridges, which are linked together by one or more processors represented by the processor 801 and various circuits of memories represented by the memory 803. The bus architecture may also link together a variety of other circuitry such as peripheral equipment, voltage regulator and power management circuit etc., which are well known in the art and therefore will not be further described herein. The bus interface provides the interface. The transceiver 802 may include multiple elements, that is, the transceiver 802 may include a transmitter and a receiver, which provides a unit for communicating with various other devices over a transmission medium. For different user equipment, the user interface 804 may also be an interface capable of externally and inwardly connecting the desired device, the connected device including but not limited to a keypad, a display, a speaker, a microphone, a joystick, and the like.

The processor 801 is responsible for managing the bus architecture and general processing and the memory 803 may store data used by the processor 801 in performing operations.

Optionally, when the program is executed by the processor 803, the following operation may also be implemented.

The channel measurement resources and the interference measurement resources may be measured according to the resource configuration information, and at least one L1-SINR may be calculated according to measurement of the channel measurement resources and the interference measurement resources.

Optionally, when the program is executed by the processor 803, the following operation may also be implemented.

QCL configuration information is received from the base station. The QCL configuration information is used to configure a channel measurement resource and an interference measurement resource that have a QCL-Type D relationship with each other.

Herein the L1-SINR may be calculated from measurement of a channel measurement resource and an interference measurement resource that have a QCL-Type D relationship with each other.

Optionally, when the program is executed by the processor 803, the following operation may also be implemented.

The L1-SINR and an identifier of a channel measurement resource and/or an identifier of an interference measurement resource corresponding to the L1-SINR may be reported to the base station.

Optionally, M may be equal to N, and the N channel measurement resources and N interference measurement resources may be in one-to-one correspondence in a predetermined order.

Optionally, when the program is executed by the processor 803, the following operations may also be implemented.

A channel measurement resource and an interference measurement resource corresponding to each other may be measured in a same receiving direction; herein receiving directions for different channel measurement resources are different.

Each of the at least one L1-SINR may be calculated according to measurement of a channel measurement resource and an interference measurement resource corresponding to each other in the same receiving direction.

Optionally, when the program is executed by the processor 803, the following operations may also be implemented.

Y L1-SINRs may be selected from the at least one L1-SINR, and the Y L1-SINRs and identifiers of channel measurement resources and/or identifiers of interference measurement resources corresponding to the Y L1-SINRs may be reported to the base station; herein Y is an integer greater than or equal to 1.

Optionally, the N channel measurement resources may be located before the M interference measurement resources in time domain.

Optionally, when the program is executed by the processor 803, the following operations may also be implemented.

The N channel measurement resources may be measured in different receiving directions, and X channel measurement resources may be selected according to a first measurement.

The M interference measurement resources may be measured in the receiving directions corresponding to the X channel measurement resources to obtain a second measurement.

Each of the at least one L1-SINR may be calculated according to measurement of a channel measurement resource and an interference measurement resource in the same receiving direction.

Optionally, when the program is executed by the processor 803, the following operations may also be implemented.

Z L1-SINRs may be selected from the at least one L1-SINR; the Z L1-SINRs and identifiers of channel measurement resources and identifiers of interference measurement resources corresponding to the Z L1-SINRs may be reported to the base station; herein the Z is an integer greater than or equal to 1.

Optionally, the M interference measurement resources may include N first interference measurement resources and S second interference measurement resources, the N channel measurement resources and the N first interference measurement resource may be in one-to-one correspondence in a predetermined order, and the N channel measurement resources may be located before the S second interference measurement resources in time domain.

Optionally, when the program is executed by the processor 803, the following operations may also be implemented.

A channel measurement resource and a first interference measurement resource corresponding to each other may be measured in a same receiving direction. Receiving directions for different channel measurement resources are different.

At least one L1-SINR may be calculated according to measurement of the channel measurement resource and the first interference measurement resource corresponding to each other in the same receiving direction.

P L1-SINRs may be selected from the at least one L1-SINR, and P receiving directions corresponding to the P L1-SINRs may be determined; herein P is an integer greater than or equal to 1.

The S second interference measurement resources may be measured in the P receiving directions.

The at least one L1-SINR may be calculated, each according to measurement of a channel measurement resource and a second interference measurement resource in the same receiving direction.

Optionally, when the program is executed by the processor 803, the following operations may also be implemented.

L L1-SINRs may be selected from the at least one L1-SINR; the L L1-SINRs and an identifier(s) of a channel measurement resource(s) and an identifier(s) of a second interference measurement resource(s) corresponding to the L L1-SINRs may be reported to the base station; herein the L is an integer greater than or equal to 1.

Referring to FIG. 9, which is not part of the present invention and is illustrated for illustration purpose, embodiments of the present disclosure provide a base station 90, including a transmitting module 91, configured to transmit resource configuration information for channel measurement and interference measurement to a terminal. The resource configuration information includes N channel measurement resources and M interference measurement resources, and both N and M are integers greater than or equal to 1.

Optionally, the base station further includes a receiving module, configured to receive L1-SINR and an identifier of a channel measurement resource amd/or an identifier of an interference measurement resource corresponding to the L1-SINR reported by the terminal.

Optionally, the transmitting module is further configured to transmit QCL configuration information to terminal; herein the QCL configuration information is used to configure a channel measurement resource and an interference measurement resource that have a QCL-Type D relationship with each other.

Herein the L1-SINR may be calculated from measurement of a channel measurement resource and an interference measurement resource that have a QCL-Type D relationship with each other.

Optionally, M may be equal to N, and the N channel measurement resources and N interference measurement resources may be in one-to-one correspondence in a predetermined order.

Optionally, the N channel measurement resources may be located before the M interference measurement resources in time domain.

Optionally, the M interference measurement resources may include N first interference measurement resources and S second interference measurement resources, the N channel measurement resources and the N first interference measurement resource may be in one-to-one correspondence in a predetermined order, and the N channel measurement resources may be located before the S second interference measurement resources in time domain.

Optionally, the base station further includes a configuration module, configured to when performing multi-user pairing for MU-MIMO, configure, based on the L1-SINRs and identifiers of channel measurement resources and/or identifiers of interference measurement resources corresponding to the L1-SINRs reported by the terminal, a receiving beam direction of a channel measurement resource corresponding to the same L1-SINR in the reported L1-SINRs to the terminal, and configure a receiving beam direction of an interference measurement resource corresponding to the L1-SINR to another terminal. Herein, the another terminal and the terminal belong to the same multi-user pairing.

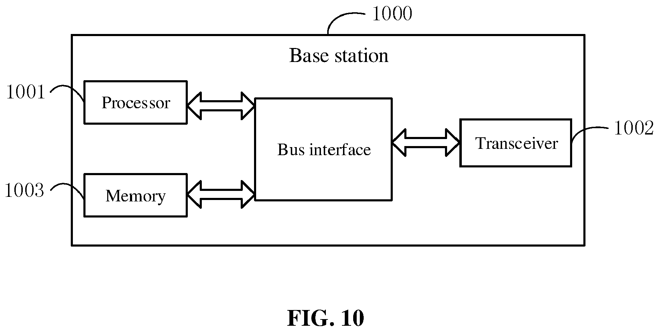

Referring to FIG. 10, which is not part of the present invention and is illustrated for illustration purpose, embodiments of the present disclosure provide another structure structural diagram of a base station 1000, which includes a processor 1001, a transceiver 1002, a memory 1003 and a bus interface.

In the embodiment of the present disclosure, the base station 1000 further includes instructions stored in the memory 1003 and executable by the processor 1001. The following operations can be implemented when the instructions are executed by the processor 1001.

Resource configuration information for channel measurement and interference measurement is transmitted to a terminal. The resource configuration information includes N channel measurement resources and M interference measurement resources, and both N and M are integers greater than or equal to 1.

In FIG. 10, a bus architecture may include any number of interconnected buses and bridges, which are linked together by one or more processors represented by the processor 1001 and various circuits of memories represented by the memory 1003. The bus architecture may also link together a variety of other circuitry such as peripheral equipment, voltage regulator and power management circuit etc., which are well known in the art and therefore will not be further described herein. The bus interface provides the interface. The transceiver 1002 may include multiple elements, that is, the transceiver 1002 may include a transmitter and a receiver, which provides a unit for communicating with various other devices over a transmission medium.

The processor 1001 is responsible for managing the bus architecture and general processing and the memory 1003 may store data used by the processor 1001 in performing operations.

Optionally, when the program is executed by the processor 1001, the following operations may also be implemented.

L1-SINR and an identifier of a channel measurement resource and/or an identifier of an interference measurement resource corresponding to the L1-SINR reported by the terminal may be received.

Optionally, when the program is executed by the processor 1001, the following operations may also be implemented.

QCL configuration information is transmitted to the terminal. The QCL configuration information is used to configure a channel measurement resource and an interference measurement resource that have a QCL-Type D relationship with each other.

An L1-SINR may be calculated from measurement of a channel measurement resource and an interference measurement resource that have a QCL-Type D relationship with each other.

Optionally, M may be equal to N, and the N channel measurement resources and N interference measurement resources may be in one-to-one correspondence in a predetermined order.

Optionally, the N channel measurement resources may be located before the M interference measurement resources in time domain.

Optionally, the M interference measurement resources may include N first interference measurement resources and S second interference measurement resources, the N channel measurement resources and the N first interference measurement resource may be in one-to-one correspondence in a predetermined order, and the N channel measurement resources may be located before the S second interference measurement resources in time domain.

Optionally, when the program is executed by the processor 1001, the following operations may also be implemented.

When multi-user pairing for MU-MIMO is being performed, based on L1-SINRs and identifiers of channel measurement resources and/or identifiers of interference measurement resources corresponding to the L1-SINRs reported by the terminal, a receiving beam direction of a channel measurement resource corresponding to a same L1-SINR in the reported L1-SINRs is configured to the terminal, and a receiving beam direction of an interference measurement resource corresponding to the L1-SINR is configured to another terminal; herein the another terminal and the terminal belong to the same multi-user pairing.

Those skilled in the art will appreciate that the various example units and algorithm steps described in connection with the embodiments disclosed herein can be implemented in electronic hardware or a combination of computer software and electronic hardware. Whether these functions are performed in hardware or software form depends on specific applications and design constraints of the technical scheme. Those skilled may use different methods for each specific application to implement the described functions but such implementation should not be considered beyond the scope of the present disclosure.

Those skilled in the art will clearly appreciate that for convenience and conciseness of description, the specific operating processes of the above-mentioned systems, devices and units may refer to the corresponding processes in the aforementioned method embodiments and will not be repeated herein.

In the embodiments provided herein it should be understood that the disclosed devices and methods may be implemented in other ways. For example, the above-mentioned embodiments of the device are only schematic. For example, the division of the unit is only a logical functional division, and in practice, there may be another division manner. For example, multiple units or components may be combined or integrated into another system, or some features may be ignored or not performed. On the other hand, the coupling or direct coupling or communication connection between each other illustrated or discussed may be indirect coupling or communication connection through some interface, device or unit, and may be electrical, mechanical or other forms.

The units illustrated as separate elements may or may not be physically separated, and the elements displayed as units may or may not be physical units, i.e., they may be located in one place, or may be distributed over multiple network units. Some or all of the units may be selected according to actual needs to achieve the objectives of the embodiments of the present disclosure.

In addition, the functional units in various embodiments of the present disclosure may be integrated in one processing unit, or each unit may exist physically individually, or two or more units may be integrated in one unit.

The functions may be stored in a computer-readable storage medium if implemented in form of software functional units and sold or used as stand-alone products. Based on such an understanding, the essence of the technical solutions of the present disclosure, or the part that contributes to the related technologies, or part of the technical solutions can be embodied in the form of a software product stored in a storage medium including several instructions, which can be executed by a computer device (which may be a personal computer, a server, or a base station, etc.) to implement all or part of the operations of the measurement configuration method described in the various embodiments of the present disclosure. The foregoing storage medium includes a Universal Serial Bus (USB) flash drive, a removable hard disk, a Read-Only Memory (ROM), a Random Access Memory (RAM), a magnetic disk, an optical disk, or any other medium that can store program code.

The foregoing description is merely specific embodiments of the present disclosure, but the scope of protection of the present disclosure is not limited hereto. Any variation or replacement readily contemplated by those skilled in the art within the scope of the present disclosure should be included within the scope of protection of the present disclosure. Therefore, the scope of protection of the present disclosure shall be limited by the scope of protection of the claims.

## Claims

1. A measurement configuration method, performed by a terminal, the method comprising:
receiving (21) resource configuration information for channel measurement and interference measurement from a base station, wherein the resource configuration information comprises N channel measurement resources and M interference measurement resources, and both N and M are integers greater than or equal to 1;
measuring, according to the resource configuration information, the channel measurement resources and the interference measurement resources; and
calculating, according to measurement of the channel measurement resources and the interference measurement resources, at least one Layer 1-Signal Interference plus Noise Ratio, L1-SINR;
**characterized in that** the M interference measurement resources comprises N first interference measurement resources and S second interference measurement resources, the N channel measurement resources and the N first interference measurement resource are in one-to-one correspondence in a predetermined order, and the N channel measurement resources are located before the S second interference measurement resources in time domain, wherein S is an integer greater than or equal to 1,
wherein calculating, according to the measurement of the channel measurement resources and the interference measurement resources, the at least one Layer 1-Signal Interference plus Noise Ratio, L1-SINR comprises:
calculating N L1-SINRs, wherein each of the N L1-SINRs is calculated according to measurement of a respective one of the N channel measurement resources and a respective one of the N first interference measurement resource corresponding to the channel measurement resource in a same receiving direction;
selecting P first L1-SINRs from the N L1-SINRs, wherein P is an integer greater than or equal to 1;
determining P receiving directions corresponding to the P first L1-SINRs; and
measuring the S second interference measurement resources in the P receiving directions, and calculating each of the at least one L1-SINR according to measurement of a respective one of the channel measurement resources and a respective one of the S second interference measurement resources in a same direction,
wherein said at least one L1-SINR is reported to the base station with the corresponding identifier of the channel measurement resource and/or the corresponding identifier of the interference measurement resource corresponding to said L1-SINR.

2. The method of claim 1, wherein each of the channel measurement resources is Channel State Information Reference Signal, CSI-RS, or Synchronization Signal Block, SSB, and each of the interference measurement resources is CSI-RS.

3. A terminal (800), comprising:
a processor (801);
a memory (803); and
a program stored in the memory (803) and executable by the processor (801),
wherein the program, when executed by the processor (801), cause the terminal to perform the measurement configuration method of any one of claims 1 to 2.

## Patentansprüche

1. Messkonfigurationsverfahren, durchgeführt durch ein Endgerät, wobei das Verfahren Folgendes umfasst:
Empfangen (21) von Ressourcenkonfigurationsinformationen für Kanalmessung und Interferenzmessung von einer Basisstation, wobei die Ressourcenkonfigurationsinformationen N Kanalmessungsressourcen und M Interferenzmessungsressourcen umfassen, und sowohl N als auch M Ganzzahlen größer als oder gleich wie 1 sind;
Messen, gemäß den Ressourcenkonfigurationsinformationen, der Kanalmessungsressourcen und der Interferenzmessressourcen; und
Berechnen, gemäß Messung der Kanalmessungsressourcen und der Interferenzmessungsressourcen, von mindestens einem Schicht-1-Signal-Interferenz-plus-Rausch-Verhältnis (L1-SINR);
**dadurch gekennzeichnet, dass** die M Interferenzmessungsressourcen N erste Interferenzmessungsressourcen und S zweite Interferenzmessungsressourcen umfassen, die N Kanalmessungsressourcen und die N ersten Interferenzmessungsressourcen in Eins-zu-Eins-Entsprechung in einer vorbestimmten Reihenfolge sind und sich die N Kanalmessungsressourcen vor den S zweiten Interferenzmessungsressourcen in der Zeitdomäne befinden, wobei S eine Ganzzahl größer als oder gleich wie 1 ist,
wobei das Berechnen, gemäß der Messung der Kanalmessungsressourcen und der Interferenzmessungsressourcen, des mindestens einen Schicht-1-Signal-Interferenz-plus-Rausch-Verhältnisses (L1-SINR) Folgendes umfasst:
Berechnen von N L1-SINRs, wobei jedes aus den L1-SINRs gemäß Messungen einer jeweiligen der N Kanalmessungsressourcen und einer entsprechenden der N ersten Interferenzmessungsressourcen entsprechend der Kanalmessungsressource in einer gleichen Empfangsrichtung berechnet wird;
Auswählen von P ersten L1-SINRs aus den N L1-SINRs, wobei P eine Ganzzahl größer als oder gleich wie 1 ist;
Bestimmen von P Empfangsrichtungen entsprechend den P ersten L1-SINRs; und
Messen der S zweiten Interferenzmessungsressourcen in den P Empfangsrichtungen, und Berechnen von jeder aus den mindestens einen L1-SINRs gemäß Messung einer entsprechenden der Kanalmessungsressourcen und einer entsprechenden der S zweiten Interferenzmessungsressourcen in einer gleichen Richtung,
wobei das mindestens eine L1-SINR an die Basisstation gemeldet wird mit der entsprechenden Kennung der Kanalmessungsressource und/oder der entsprechenden Kennung der Interferenzmessungsressource entsprechend des L1-SINR.

2. Verfahren nach Anspruch 1, wobei jede der Kanalmessungsressourcen Kanalzustandsinformationen-Referenzsignal (CSI-RS) oder Synchronisationssignalblock (SSB) ist und jede der Interferenzmessungsressourcen CSI-RS ist.

3. Endgerät (800), umfassend:
einen Prozessor (801);
einen Speicher (803); und
ein Programm, das im Speicher (803) gespeichert ist und durch den Prozessor (801) ausgeführt werden kann,
wobei das Programm, wenn es durch den Prozessor (801) ausgeführt wird, verursacht, dass das Endgerät das Messkonfigurationsverfahren nach einem der Ansprüche 1 bis 2 durchführt.

## Revendications

1. Procédé de configuration de mesure, effectué par un terminal, le procédé comprenant :
la réception (21) d'informations de configuration de ressources pour une mesure de canal et une mesure d'interférence provenant d'une station de base, les informations de configuration de ressources comprenant N ressources de mesure de canal et M ressources de mesure d'interférence, et N et M étant tous deux des nombres entiers supérieurs ou égaux à 1 ;
la mesure, en fonction des informations de configuration de ressources, des ressources de mesure de canal et des ressources de mesure d'interférence ; et
le calcul, en fonction de la mesure des ressources de mesure de canal et des ressources de mesure d'interférence, au moins un rapport d'interférence de signal de couche 1 plus bruit, L1-SINR;
**caractérisé en ce que** les M ressources de mesure d'interférence comprennent N premières ressources de mesure d'interférence et S secondes ressources de mesure d'interférence, les N ressources de mesure de canal et les N premières ressources de mesure d'interférence sont en correspondance biunivoque dans un ordre prédéterminé, et les N ressources de mesure de canal sont situées avant les S secondes ressources de mesure d'interférence dans le domaine temporel, où S est un nombre entier supérieur ou égal à 1,
dans lequel le calcul, en fonction de la mesure des ressources de mesure de canal et des ressources de mesure d'interférence, l'au moins un rapport d'interférence de signal de couche 1 plus bruit, L1-SINR, comprend :
le calcul de N L1-SINR, chacun des N L1-SINR étant calculé en fonction de la mesure d'une ressource respective parmi les N ressources de mesure de canal et d'une ressource respective parmi les N premières ressources de mesure d'interférence correspondant à la ressource de mesure de canal dans une même direction de réception ;
la sélection de P premiers L1-SINR parmi les N L1-SINR, P étant un nombre entier supérieur ou égal à 1 ;
la détermination de P directions de réception correspondant aux P premiers L1-SINR ; et
la mesure des S secondes ressources de mesure d'interférence dans les P directions de réception, et le calcul de chacune de l'au moins un L1-SINR en fonction de la mesure d'une ressource respective parmi les ressources de mesure de canal et d'une ressource respective des S secondes ressources de mesure d'interférence dans une même direction,
dans lequel ledit au moins un L1-SINR est signalé à la station de base avec l'identifiant correspondant de la ressource de mesure de canal et/ou l'identifiant correspondant de la ressource de mesure d'interférence correspondant audit L1-SINR.

2. Procédé selon la revendication 1, dans lequel chacune des ressources de mesure de canal est un signal de référence d'informations sur l'état de canal, CSI-RS, ou un bloc de signal de synchronisation, SSB, et chacune des ressources de mesure d'interférence est CSI-RS.

3. Terminal (800), comprenant :
un processeur (801) ;
une mémoire (803) ; et
un programme stocké dans la mémoire (803) et exécutable par le processeur (801),
dans lequel le programme, lorsqu'il est exécuté par le processeur (801), amène le terminal à exécuter le procédé de configuration de mesure selon l'une quelconque des revendications 1 à 2.
